# EUROPÄISCHE PATENTSCHRIFT

(11) **EP 2 329 684 B1**
(45) Veröffentlichungstag und Bekanntmachung des Hinweises auf die Patenterteilung: **15.08.2012**
(21) Anmeldenummer: 09782741.4
(22) Anmeldetag: 08.09.2009
(51) Int. Cl.: H05B 7/00, H05B 7/144

(54) **STROMVERSORGUNGSANLAGE FÜR EINEN DREHSTROM-LICHTBOGENOFEN MIT ZWISCHENKREISUMRICHTER ZWISCHEN NETZANSCHLUSS UND OFENTRANSFORMATOR**
POWER SUPPLY SYSTEM FOR A THREE-PHASE ARC FURNACE HAVING AN INDIRECT CONVERTER BETWEEN A MAINS CONNECTION AND A FURNACE TRANSFORMER
INSTALLATION D'ALIMENTATION ÉLECTRIQUE POUR UN FOUR À ARC ÉLECTRIQUE TRIPHASÉ AVEC UN CONVERTISSEUR INDIRECT ENTRE LE RACCORDEMENT AU RÉSEAU ET LE TRANSFORMATEUR DU FOUR

(30) Priorität: 30.09.2008 DE 102008049610
(43) Veröffentlichungstag der Anmeldung: 08.06.2011
(73) Patentinhaber: Siemens Aktiengesellschaft, 80333 München (DE)
(72) Erfinder: HÖRGER, Wolfgang, 91353 Hausen (DE); MEUSEL, Wolfgang, 91074 Herzogenaurach (DE)
(86) Internationale Anmeldenummer: PCT/EP2009/061605
(87) Internationale Veröffentlichungsnummer: WO 2010/037616

(56) Entgegenhaltungen:
- EP-A- 0 214 661
- EP-A- 1 848 248
- DE-A1- 3 733 077
- DE-A1- 19 920 049
- US-A- 6 075 350
- US-B1- 6 274 851

## Beschreibung

Die vorliegende Erfindung betrifft eine Stromversorgungsanlage für einen Drehstrom-Lichtbogenofen, wobei die Stromversorgungsanlage mindestens einen Ofentransformator aufweist, der primärseitig an ein Drehstrom-Versorgungsnetz und sekundärseitig an den Drehstrom-Lichtbogenofen angeschlossen ist.

Derartige Stromversorgungsanlagen sind allgemein bekannt. Rein beispielhaft wird auf die EP 0 847 612 B1 und auf die EP 0 023 058 A1 verwiesen.

Drehstrom-Lichtbogenöfen stellen eine stark nichtlineare Last dar. Die Nichtlinearitäten haben deutliche Netzrückwirkungen zur Folge, insbesondere sogenannten Flicker. Aus diesem Grund weisen Stromversorgungsanlagen für Drehstrom-Lichtbogenöfen in der Regel einen Blindleistungskompensator auf. Der Blindleistungskompensator ist dem Ofentransformator parallel geschaltet. Im einfachsten Fall kann der Blindleistungskompensator beispielsweise als sogenannter TCR (thyristor controlled reactor) ausgebildet sein, siehe die genannte EP 0 847 612 B1. Ebenso ist bekannt, den Blindleistungskompensator als STATCOM (static compensator) auszubilden. Diesbezüglich wird rein beispielhaft auf die US 6,075,350 A verwiesen.

Der Strom zum Betreiben eines Drehstrom-Lichtbogenofens ist sehr hoch. Aus diesem Grund wird versucht, den Ofentransformator möglichst nahe am Drehstrom-Lichtbogenofen selbst anzuordnen, damit die Leitungslänge vom Ofentransformator zum Drehstrom-Lichtbogenofen möglichst kurz gehalten werden kann. In der Regel werden der Ofentransformator und die dem Ofentransformator nachgeordneten Komponenten im Ofenhaus angeordnet. Auf Grund dieses Umstands herrschen im Ofenhaus recht beengte Platzverhältnisse. Weiterhin stimmen Phasenzahl und Betriebsfrequenz des Drehstrom-Lichtbogenofens im Stand der Technik zwangsweise mit Phasenzahl und Betriebsfrequenz des Drehstrom-Versorgungsnetzes überein.

Aus der DE 199 20 049 C2 ist eine Stromversorgungsanlage für einen Drehstrom-Lichtbogenofen bekannt, bei welchem dem Drehstrom-Lichtbogenofen ein Zwischenkreisumrichter unmittelbar vorgeordnet ist. Der Zwischenkreisumrichter weist eingangsseitig einen Gleichrichter, ausgangsseitig einen Wechselrichter und dazwischen einen Zwischenkreis auf. Ein Ofentransformator ist in der DE 199 20 049 C2 nicht erwähnt. Er dürfte Bestandteil einer in der DE 199 20 049 C2 erwähnten Drehstromquelle sein. Der EP 1 848 248 A1 ist ein gleichgelagerter Offenbarungsgehalt zu entnehmen.

Aus der US 6 274 851 B1 ist eine Stromversorgungsanlage für einen Drehstrom-Lichtbogenofen bekannt, bei welcher die Elektroden über Stromsteller mit elektrischer Energie versorgt werden. Zwischen den Stromstellern und den Elektroden kann ein Ofentransformator angeordnet sein.

Aus der DE 30 25 644 A1 ist eine Stromversorgungsanlage für einen Drehstrom-Lichtbogenofen bekannt, bei welcher ein Ofentransformator primärseitig unmittelbar an ein Drehstromversorgungsnetz und sekundärseitig direkt an den Drehstrom-Lichtbogenofen angeschlossen ist. Die ausgangsseitigen Phasen des Ofentransformators sind über Brückenschaltungen miteinander verbunden, wobei die Brückenschaltungen jeweils aus einer Reihenschaltung eines Kondensators und eines Schalters bestehen.

Die Aufgabe der vorliegenden Erfindung besteht darin, eine Stromversorgungsanlage für einen Drehstrom-Lichtbogenofen zu schaffen, bei der eine Entkopplung von Phasenzahl und Betriebsfrequenz des Drehstrom-Lichtbogenofens vom Drehstrom-Versorgungsnetz möglich ist. Weiterhin sollen Netzrückwirkungen nach Möglichkeit auf die symmetrische Wirkleistung begrenzt werden.

Die Aufgabe wird durch eine Stromversorgungsanlage mit den Merkmalen des Anspruchs 1 gelöst. Vorteilhafte Ausgestaltungen der Stromversorgungsanlage sind Gegenstand der abhängigen Ansprüche 2 bis 10.

Erfindungsgemäß ist der Ofentransformator primärseitig über einen Zwischenkreisumrichter an das Drehstrom-Versorgungsnetz angeschlossen. Der Zwischenkreisumrichter weist netzseitig mindestens einen Gleichrichter, transformatorseitig mindestens einen Wechselrichter und zwischen dem Gleichrichter und dem Wechselrichter einen Zwischenkreis auf. Jede Phase des Drehstromversorgungsnetzes ist über je zwei Umrichterelemente des Gleichrichters mit dem Zwischenkreis verbunden. Jede primärseitige Phase des Ofentransformators ist über je zwei Umrichterelemente des Wechselrichters mit dem Zwischenkreis verbunden. Jedes Umrichterelement besteht aus einer mehrstufigen Reihenschaltung von Submodulen. Jedes Submodul umfasst einen Speicherkondensator und selbstgeführte Halbleiterschalter. Die Halbleiterschalter jedes Submoduls sind unabhängig von den Halbleiterschaltern der anderen Submodule desselben Umrichterelements und der anderen Umrichterelemente schaltbar, so dass der Speicherkondensator des jeweiligen Submoduls mittels der Halbleiterschalter des jeweiligen Submoduls je nach deren Schaltzustand überbrückt oder aktiv ist.

Durch die erfindungsgemäße Ausgestaltung kann insbesondere ein Anschluss des Zwischenkreisumrichters an der Sekundärseite des Ofentransformators vermieden werden. Der Zwischenkreisumrichter kann daher außerhalb des Ofenhauses angeordnet werden.

In einer bevorzugten Ausgestaltung der Stromversorgungsanlagen werden die Halbleiterschalter der Umrichterelemente derart angesteuert, dass über die symmetrische Belastung der Phasen des Drehstrom-Versorgungsnetzes mit Wirkleistung hinausgehende Rückwirkungen der Phasen des Drehstrom-Lichtbogenofens auf das Drehstrom-Versorgungsnetz minimiert werden. Durch diese Ausgestaltung können unerwünschte Netzrückwirkungen (insbesondere Blindleistungskomponenten und ungleichmäßige Belastungen der Phasen des Drehstrom-Versorgungsnetzes) auf einfache Weise kompensiert werden. Weiterhin wird eine größere Flexibilität bei der räumlichen Anordnung der einzelnen Komponenten der Stromversorgungsanlage geschaffen.

In einer Minimalkonfiguration ist die Anzahl an Halbleiterschaltern pro Submodul zwei. In diesem Fall weist das Submodul in der Regel einen einzigen Speicherkondensator auf.

Bei der bevorzugten Ausgestaltung der Stromversorgungsanlage ist es möglich, dass dem Ofentransformator kein Blindleistungskompensator parallel geschaltet ist. Alternativ können dem Ofentransformator ein Blindleistungskompensator oder Filterkreise parallel geschaltet sein.

Wenn der Blindleistungskompensator vorhanden ist, weist er in einer bevorzugten Ausgestaltung der vorliegenden Erfindung eine Anzahl von weiteren Umrichterelementen auf. Jedes weitere Umrichterelement besteht in diesem Fall aus einer mehrstufigen Reihenschaltung von weiteren Submodulen, von denen jedes einen Speicherkondensator und selbstgeführte Halbleiterschalter umfasst. Die Halbleiterschalter jedes weiteren Submoduls sind unabhängig von den Halbleiterschaltern der anderen weiteren Submodule desselben weiteren Umrichterelements und der anderen weiteren Umrichterelemente schaltbar, so dass der Speicherkondensator des jeweiligen weiteren Submoduls mittels der Halbleiterschalter des weiteren Submoduls je nach deren Schaltzustand überbrückt oder aktiv ist. Die Halbleiterschalter der weiteren Submodule werden derart angesteuert, dass über die symmetrische Belastung der Phasen des Drehstrom-Versorgungsnetzes mit Wirkleistung hinausgehende Rückwirkungen der Phasen des Drehstrom-Lichtbogenofens auf das Drehstrom-Versorgungsnetz minimiert werden.

Der Blindleistungskompensator kann mit den primärseitigen Phasen des Ofentransformators und/oder mit den Phasen des Drehstrom-Versorgungsnetzes verbunden sein.

Alternativ oder zusätzlich zum Vorhandensein des Blindleistungskompensators kann beispielsweise mit den primärseitigen Phasen des Ofentransformators und/oder mit den Phasen des Drehstrom-Versorgungsnetzes eine Kondensatorschaltung verbunden sein, beispielsweise eine Kondensatorbank.

In der Regel weist die erfindungsgemäße Stromversorgungsanlage einen einzigen Ofentransformator, einen einzigen Gleichrichter und einen einzigen Wechselrichter auf. Die genannten Komponenten können jedoch mehrfach vorhanden sein. So kann die Stromversorgungsanlage beispielsweise mehrere parallel geschaltete Gleichrichter aufweisen. Dadurch kann ein größerer Strom in den Zwischenkreis eingespeist werden. Alternativ oder zusätzlich kann die Stromversorgungsanlage mehrere parallel geschaltete Wechselrichter aufweisen. Dadurch kann beispielsweise ein Ofentransformator mit einem größeren Primärstrom versorgt werden oder können mehrere Ofentransformatoren mit Primärstrom versorgt werden oder auch andere Komponenten mit elektrischer Energie versorgt werden. Insbesondere in dem Fall, dass mehrere Ofentransformatoren vorhanden sind, ist jedoch jeder Wechselrichter vorzugsweise mit maximal einem Ofentransformator verbunden.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: eine Stromversorgungsanlage für einen Drehstrom-Lichtbogenofen,
- FIG 2: eine Umrichtereinheit,
- FIG 3: ein Submodul,
- FIG 4: eine alternative Ausgestaltung einer Stromversorgungsanlage und
- FIG 5: eine weiteres Umrichterelement.

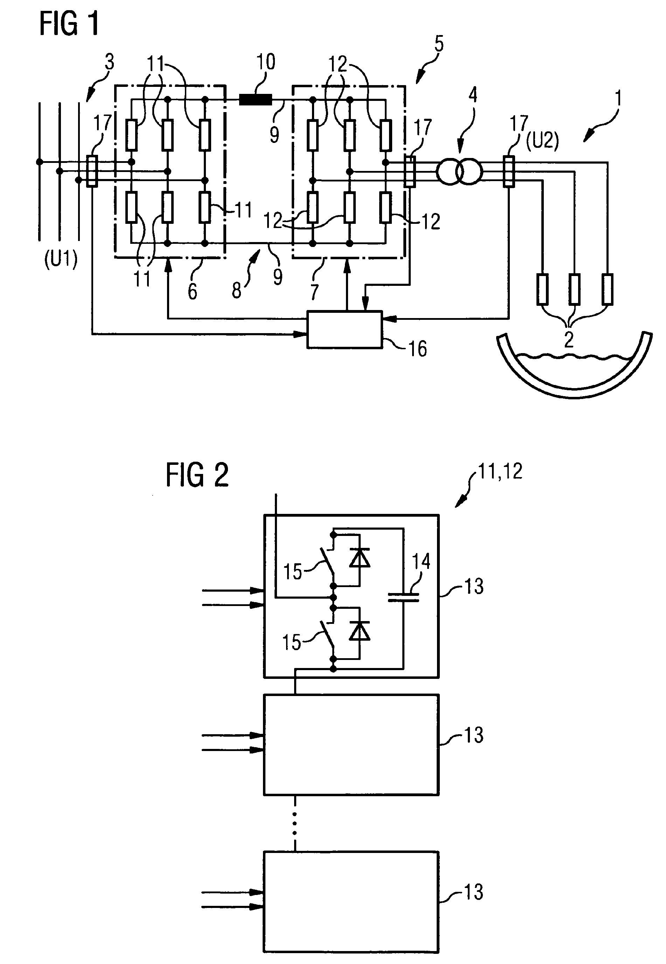

Gemäß FIG 1 weist ein Drehstrom-Lichtbogenofen 1 mehrere Elektroden 2 auf, die aus einem Drehstrom-Versorgungsnetz 3 gespeist werden. Die Speisung des Drehstrom-Lichtbogenofens 1 erfolgt, wie allgemein üblich, über einen Ofentransformator 4, der eine relativ hohe Spannung U1 des Drehstrom-Versorgungsnetzes 3 (beispielsweise 30 kV oder 110 kV) auf eine relativ niedrige Ofenspannung U2 (in der Regel mehrere 100 Volt bis maximal 2 kV) herunter transformiert. Die Elektroden 2 sind mit der Sekundärseite des Ofentransformators 4 direkt verbunden. Der Ofentransformator 4 ist folglich als Drehstrom-Transformator ausgebildet. Er weist mindestens zwei, in der Regel drei Phasen auf.

Bei dem Drehstrom-Versorgungsnetz 3 kann es sich um ein externes, größeres Netz handeln. Alternativ kann es sich um ein internes Netz des Betreibers des Drehstrom-Lichtbogenofens 1 handeln. Im Falle eines internen Netzes kann es sich alternativ um ein eigenständiges Netz handeln oder um ein Netz, das über einen Abspanntransformator an ein externes Netz angebunden ist.

Im Unterschied zum Stand der Technik ist der Ofentransformator 4 nicht direkt an das Drehstrom-Versorgungsnetz 3 angebunden. Erfindungsgemäß ist zwischen der Primärseite des Ofentransformators 4 und dem Drehstrom-Versorgungsnetz 3 ein Zwischenkreisumrichter 5 angeordnet. Der Zwischenkreisumrichter 5 weist netzseitig einen Gleichrichter 6 und transformatorseitig einen Wechselrichter 7 auf. Zwischen dem Gleichrichter 6 und dem Wechselrichter 7 ist ein Zwischenkreis 8 angeordnet. Jede Phase des Drehstrom-Versorgungsnetzes 3 ist über je zwei Umrichterelemente 11 des Gleichrichters 6 mit dem Zwischenkreis 8 verbunden. Ebenso ist jede primärseitige Phase des Ofentransformators 4 über je zwei Umrichterelemente 12 des Wechselrichters 7 mit dem Zwischenkreis 8 verbunden.

Der Zwischenkreis 8 kann alternativ als Stromzwischenkreis oder als Spannungszwischenkreis ausgebildet sein. Wenn der Zwischenkreis 8 als Stromzwischenkreis ausgebildet ist, ist in einer der Verbindungsleitungen 9 des Zwischenkreises 8 zwischen Gleichrichter 6 und Wechselrichter 7 eine Drossel 10 angeordnet. Wenn der Zwischenkreis 8 als Spannungszwischenkreis ausgebildet ist, kann die Drossel 10 entfallen. Es kann in diesem Fall alternativ ein zentraler Stützkondensator im Zwischenkreis 8 angeordnet sein oder es können in den Umrichterelementen 11, 12 des Gleichrichters 6 und/oder des Wechselrichters 7 Kondensatoren angeordnet sein.

In der Regel sind die Umrichterelemente 11 des Gleichrichters 6 untereinander gleich aufgebaut. Ebenso sind in der Regel die Umrichterelemente 12 des Wechselrichters 7 untereinander gleich aufgebaut. Weiterhin sind in der Regel die Umrichterelemente 11 des Gleichrichters 6 und die Umrichterelemente 12 des Wechselrichters 7 gleich aufgebaut. Die Umrichterelemente 11, 12 können nach Bedarf ausgebildet sein und betrieben werden. Vorzugsweise besteht jedes der Umrichterelemente 11, 12 gemäß FIG 2 aus einer mehrstufigen Reihenschaltung von Submodulen 13. Die Anzahl an Submodulen 13 ist nach Bedarf gewählt. In der Regel sind pro Umrichterelement 11, 12 zehn oder mehr derartiger Submodule 13 vorhanden. Vorzugsweise beträgt die Anzahl an Submodulen 13 pro Umrichterelement 11, 12 zwanzig bis zweihundert. Bevorzugt liegt die Anzahl zwischen 30 und 80 Submodulen 13. Die Submodule 13 sind untereinander gleich aufgebaut. In FIG 2 ist eines der Submodule 13 detailliert dargestellt. Auf dieses Submodul 13 beziehen sich die nachfolgenden Ausführungen.

Gemäß FIG 2 umfasst jedes Submodul 13 einen Speicherkondensator 14 und selbstgeführte Halbleiterschalter 15. Der Begriff "selbstgeführt" bedeutet, dass die Halbleiterschalter 15 durch den Halbleiterschaltern 15 von außen zugeführte Steuersignale sowohl zuschaltbar als auch abschaltbar sind. Beispielsweise können die selbstgeführten Halbleiterschalter 15 als IGBTs oder als GTO-Thyristoren ausgebildet sein. Der Begriff "selbstgeführt" steht im Gegensatz zum Begriff "netzgeführt". Dieser Begriff bedeutet, dass das jeweilige Schaltelement zwar gezielt zugeschaltet werden kann, jedoch nicht durch ein externes Steuersignal abgeschaltet werden kann. Ein Beispiel für ein netzgeführtes Halbleiterschaltelement ist ein "normaler" Thyristor. Die Speicherkondensatoren 14 der Submodule 13 realisieren in ihrer Gesamtheit eine Stützkapazität. Der Zwischenkreisumrichter 5 ist daher in dieser Ausgestaltung als Spannungszwischenkreisumrichter ausgebildet.

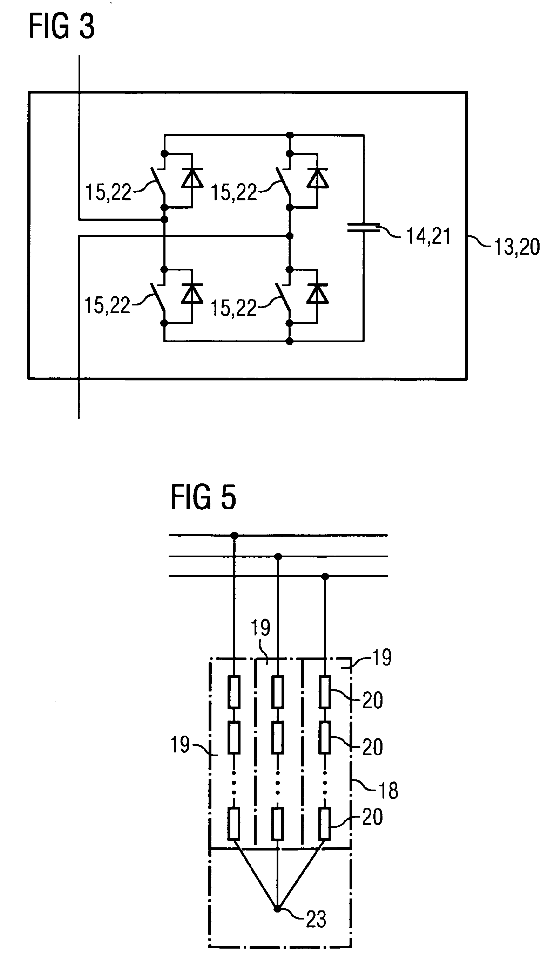

Gemäß FIG 2 weisen die Submodule 13 jeweils einen einzigen Speicherkondensator 14 und genau zwei Halbleiterschalter 15 auf. Diese Konfiguration ist die Minimalkonfiguration der Submodule 13. Alternativ könnten die Submodule 13 gemäß der Darstellung von FIG 3 beispielsweise einen Speicherkondensator 14 und vier Halbleiterschalter 15 in Brückenschaltung aufweisen. Auch könnten die Submodule 13 mehrere Speicherkondensatoren 14 aufweisen. In diesem Fall müssen pro Speicherkondensator 14 mindestens zwei Halbleiterschalter 15 vorhanden sein.

Die Halbleiterschalter 15 jedes Submoduls 13 sind unabhängig von den Halbleiterschaltern 15 der anderen Submodule 13 schaltbar. Dies gilt unabhängig davon, ob die anderen Submodule 13 im selben oder in einem anderen der Umrichterelemente 11, 12 angeordnet sind wie das betreffende Submodul 13. Je nach Schaltzustand der Halbleiterschalter 15 des jeweiligen Submoduls 13 ist der Speicherkondensator 14 des jeweiligen Submoduls 13 alternativ überbrückt oder aktiv. Wenn der in FIG 2 obere Halbleiterschalter 15 eines Submoduls 13 geschlossen ist und der andere Halbleiterschalter 15 geöffnet ist, ist der Speicherkondensator 14 des jeweiligen Submoduls 13 aktiv. Wenn umgekehrt der in FIG 2 obere Halbleiterschalter 15 geöffnet ist und der untere Halbleiterschalter 15 geschlossen ist, ist der Speicherkondensator 14 des jeweiligen Submoduls 13 überbrückt.

Die Halbleiterschalter 15 der Umrichterelemente 11, 12 werden - siehe ergänzend FIG 1 - von einer Steuereinrichtung 16 derart angesteuert, dass über die symmetrische Belastung der Phasen des Drehstrom-Versorgungsnetzes 3 mit Wirkleistung hinausgehende Rückwirkungen der Phasen des Drehstrom-Lichtbogenofens 1 auf das Drehstrom-Versorgungsnetz 3 minimiert werden. Der Steuereinrichtung 16 werden hierzu mittels geeigneter, dem Fachmann bekannter Sensoren 17 zumindest die primärseitigen und/oder die sekundärseitigen Phasenspannungen des Ofentransformators 4 und/oder die in den jeweiligen Phasen fließenden Phasenströme des Ofentransformators 4 und/oder die an den Speicherkondensatoren 14 der Submodule 13 anstehenden Spannungen zugeführt. Weiterhin können der Steuereinrichtung 16 die Phasenspannungen und/oder die Phasenströme des Drehstrom-Versorgungsnetzes 3 und/oder die Zwischenkreisspannung und/oder der Zwischenkreisstrom zugeführt werden.

Die Ermittlung der entsprechenden Steuersignale für die Halbleiterschalter 15 ist als solche bekannt. Insbesondere erfolgt eine Ansteuerung auf die gleiche Art und Weise wie sie beispielsweise aus einem der folgenden Fachaufsätze bekannt ist:
- "A new modular voltage source inverter topology" von A. Lesnicar et al., European Power Electronics Conference, Toulouse 2003,
- "An Innovative Modular Multilevel Converter Topology Suitable for a Wide Power Range", von A. Lesnicar et al., IEEE-Powertech Conference, Bologna 2003,
- "Modulares Stromrichterkonzept für Netzkupplungsanwendung bei hohen Spannungen" von Rainer Marquardt et al., ETG Fachtagung 2002 in Bad Nauheim.

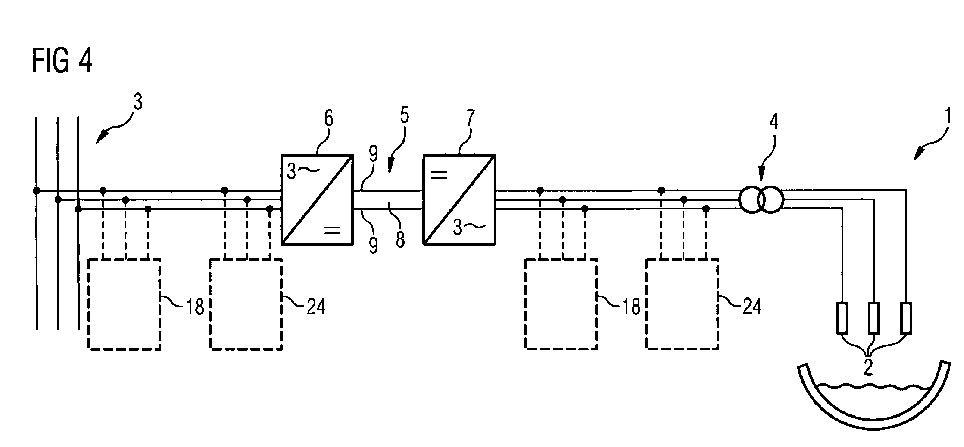

Bereits auf Grund der entsprechenden Ansteuerung der Halbeiterschalter 15 der Umrichterelemente 11, 12 des Gleichrichters 6 und des Wechselrichters 7 ist die Rückwirkung des Betriebs des Drehstrom-Lichtbogenofens 1 auf das Drehstrom-Versorgungsnetz 3 deutlich reduziert. In vielen Fällen ist es daher möglich, dass entsprechend der Darstellung von FIG 1 dem Ofentransformator 4 kein Blindleistungskompensator parallel geschaltet ist. In einer alternativen Ausgestaltung (siehe FIG 4) ist es jedoch möglich, dass dem Ofentransformator 4 ein Blindleistungskompensator 18 parallel geschaltet ist.

Durch das (gegebenenfalls zusätzliche) Vorhandensein des Blindleistungskompensators 18 können die Rückwirkungen auf das Drehstrom-Versorgungsnetz 3 (gegebenenfalls noch weiter) minimiert werden.

Es ist möglich, dass der Blindleistungskompensator 18 konventionell ausgebildet ist, beispielsweise als üblicher SVC oder als üblicher TCR. Alternativ ist es möglich, dass der Blindleistungskompensator 18 - siehe FIG 5 - eine Anzahl von weiteren Umrichterelementen 19 aufweist. Jedes weitere Umrichterelement 19 besteht gemäß FIG 5 aus einer mehrstufigen Reihenschaltung von weiteren Submodulen 20. Jedes weitere Submodul 20 ist mindestens entsprechend der Ausgestaltung von FIG 3 ausgebildet. Es umfasst mindestens einen Speicherkondensator 21 und vier selbstgeführte Halbleiterschalter 22, wobei die selbstgeführten Halbleiterschalter 22 in einer Vollbrückenschaltung angeordnet sind und der Speicherkondensator 21 im Brückenzweig der Vollbrückenschaltung angeordnet ist.

Analog zu den Umrichterelementen 11, 12 des Gleichrichters 6 und des Wechselrichters 7 sind auch bei den weiteren Submodulen 20 der weiteren Umrichterelemente 19 die Halbleiterschalter 22 jedes weiteren Submoduls 20 unabhängig von den Halbleiterschaltern 22 der anderen weiteren Submodule 20 desselben weiteren Umrichterelements 19 und der anderen weiteren Umrichterelemente 19 schaltbar. Je nach Schaltzustand der Halbleiterschalter 22 des jeweiligen weiteren Submoduls 20 ist der entsprechende Speicherkondensator 21 alternativ überbrückt oder aktiv. In dem Fall, dass der jeweilige Speicherkondensator 21 aktiv ist, ist weiterhin die Polung einstellbar. Die Halbleiterschalter 22 der weiteren Submodule 20 werden von der Steuereinrichtung 16 derart angesteuert, dass über die symmetrische Belastung der Phasen des DrehstromVersorgungsnetzes 3 mit Wirkleistung hinausgehende Rückwirkungen der Phasen des Drehstrom-Lichtbogenofens 1 auf das Drehstrom-Versorgungsnetz 3 minimiert werden. Die Ermittlung der entsprechenden Ansteuersignale für die Halbleiterschalter 22 ist bekannt, siehe beispielsweise die eingangs erwähnte US 6,075,350 A.

Die weiteren Umrichterelemente 19 des Blindleistungskompensators 18 korrespondieren von ihrer Struktur her mit dem Aufbau der Umrichterelemente 11, 12 des Gleichrichters 6 und des Wechselrichters 7. Die Anzahl an weiteren Submodulen 20 pro weiterem Umrichterelement 19 kann in der gleichen Größenordnung liegen wie die Anzahl von Submodulen 13 pro Umrichterelement 11, 12. Die Anzahl kann jedoch alternativ einen anderen Wert aufweisen.

Gemäß der Darstellung von FIG 5 sind die weiteren Umrichterelemente 19 einerseits mit je einer der primärseitigen Phasen des Ofentransformators 4 und andererseits mit einem gemeinsamen Sternpunkt 23 der primärseitigen Phasen des Ofentransformators 4 verbunden. Alternativ wäre es möglich, dass die weiteren Umrichterelemente 19 mit jeweils zwei primärseitigen Phasen des Ofentransformators 4 verbunden sind.

Bei der Ausgestaltung gemäß FIG 4 ist der Blindleistungskompensator 18, wie bereits erwähnt, mit den primärseitigen Phasen des Ofentransformators 4 verbunden. Alternativ oder zusätzlich ist es jedoch möglich, wie in FIG 4 gestrichelt eingezeichnet, dass der Blindleistungskompensator 18 oder ein weiterer Blindleistungskompensator 18 mit den Phasen des Drehstrom-Versorgungsnetzes 3 verbunden ist. Auch in diesem Fall ist alternativ eine Sternschaltung entsprechend der Darstellung von FIG 5 oder eine Dreieckschaltung zwischen je zwei Phasen möglich. Alternativ oder zusätzlich zu dem Blindleistungskompensator 18 (bzw. den Blindleistungskompensatoren 18) können gemäß FIG 4 Kondensatorschaltungen 24 vorhanden sein. Die Kondensatorschaltungen 24 sind, falls sie vorhanden sind, rein passiv aufgebaut. Sie bestehen zumindest aus kapazitiven Blindwiderständen. Sie können gegebenenfalls zusätzlich induktive Blindwiderstände aufweisen, so dass die Kondensatorschaltungen 24 zu Filterkreisen erweitert sind.

Die erfindungsgemäße Stromversorgungsanlage weist viele Vorteile auf. So ist beispielsweise die Anzahl an Phasen des Drehstrom-Lichtbogenofens 1 unabhängig von der Anzahl an Phasen des Drehstrom-Versorgungsnetzes 3. Es könnte beispielsweise das Drehstrom-Versorgungsnetz 3 drei Phasen aufweisen, der Drehstrom-Lichtbogenofen 1 vier oder fünf Phasen. Auch eine umgekehrte Ausgestaltung ist möglich. Der Ofenstrom kann hinsichtlich Amplitude, Kurvenform, Symmetriegrad usw. geregelt und beeinflusst werden. Weiterhin kann der Betrieb des Drehstrom-Lichtbogenofens 1 von der Frequenz des DrehstromVersorgungsnetzes 3 entkoppelt werden. Wenn beispielsweise das Drehstrom-Versorgungsnetz 3, wie allgemein üblich, eine Netzfrequenz von 50 Hz oder von 60 Hz aufweist, kann beispielsweise der Drehstrom-Lichtbogenofen 1 mit einer höheren Frequenz von - rein beispielhaft - 100 Hz oder 150 Hz oder mit einer niedrigeren Frequenz von beispielsweise 30 Hz oder 40 Hz betrieben werden. Hierdurch kann Einfluss auf die Regelung des Lichtbogens genommen werden. Auf Grund des Umstands, dass der Blindleistungskompensator 18 entfallen kann bzw. sogar direkt an das Drehstrom-Versorgungsnetz 3 angebunden sein kann, ist weiterhin ein optimierter Betrieb des Drehstrom-Lichtbogenofens 1 möglich. Der Zwischenkreisumrichter 5 muss nicht innerhalb des Ofenhauses angeordnet sein.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Stromversorgungsanlage für einen Drehstrom-Lichtbogenofen (1),
- wobei die Stromversorgungsanlage mindestens einen Ofentransformator (4) aufweist, der primärseitig über einen Zwischenkreisumrichter (5) an ein Drehstrom-Versorgungsnetz (3) und sekundärseitig an den Drehstrom-Lichtbogenofen (1) angeschlossen ist,
- wobei der Zwischenkreisumrichter (5) netzseitig mindestens einen Gleichrichter (6), transformatorseitig mindestens einen Wechselrichter (7) und zwischen dem Gleichrichter (6) und dem Wechselrichter (7) einen Zwischenkreis (8) aufweist,
- wobei jede Phase des Drehstrom-Versorgungsnetzes (3) über je zwei Umrichterelemente (11) des Gleichrichters (6) mit dem Zwischenkreis (8) verbunden ist und
- wobei jede primärseitige Phase des Ofentransformators (4) über je zwei Umrichterelemente (12) des Wechselrichters (7) mit dem Zwischenkreis (8) verbunden ist,
- wobei jedes Umrichterelement (11, 12) aus einer mehrstufigen Reihenschaltung von Submodulen (13) besteht,
- wobei jedes Submodul (13) einen Speicherkondensator (14) und selbstgeführte Halbleiterschalter (15) umfasst,
- wobei die Halbleiterschalter (15) jedes Submoduls (13) unabhängig von den Halbleiterschaltern (15) der anderen Submodule (13) desselben Umrichterelements (11, 12) und der anderen Umrichterelemente (11, 12) schaltbar sind, so dass der Speicherkondensator (14) des jeweiligen Submoduls (13) mittels der Halbleiterschalter (15) des jeweiligen Submoduls (13) je nach deren Schaltzustand überbrückt oder aktiv ist.

2. Stromversorgungsanlage nach Anspruch 1,
**dadurch gekennzeichnet,**
- **dass** die Halbleiterschalter (15) der Umrichterelemente (11, 12) derart angesteuert werden, dass über die symmetrische Belastung der Phasen des Drehstrom-Versorgungsnetzes (3) mit Wirkleistung hinausgehende Rückwirkungen der Phasen des Drehstrom-Lichtbogenofens (1) auf das Drehstrom-Versorgungsnetz (3) minimiert werden.

3. Stromversorgungsanlage nach Anspruch 2,
**dadurch gekennzeichnet,**
**dass** die Anzahl an Halbleiterschaltern (15) pro Submodul (13) zwei ist.

4. Stromversorgungsanlage nach Anspruch 2 oder 3,
**dadurch gekennzeichnet,**
**dass** dem Ofentransformator (4) kein Blindleistungskompensator parallel geschaltet ist.

5. Stromversorgungsanlage nach Anspruch 1, 2 oder 3,
**dadurch gekennzeichnet,**
**dass** dem Ofentransformator (4) ein Blindleistungskompensator (18) parallel geschaltet ist.

6. Stromversorgungsanlage nach Anspruch 5,
**dadurch gekennzeichnet,**
- **dass** der Blindleistungskompensator (18) eine Anzahl von weiteren Umrichterelementen (19) aufweist,
- **dass** jedes weitere Umrichterelement (19) aus einer mehrstufigen Reihenschaltung von weiteren Submodulen (20) besteht, von denen jedes einen Speicherkondensator (21) und selbstgeführte Halbleiterschalter (22) umfasst,
- **dass** die Halbleiterschalter (22) jedes weiteren Submoduls (20) unabhängig von den Halbleiterschaltern (22) der anderen weiteren Submodule (20) desselben weiteren Umrichterelements (19) und der anderen weiteren Umrichterelemente (19) schaltbar sind, so dass der Speicherkondensator (21) des jeweiligen weiteren Submoduls (20) mittels der Halbleiterschalter (22) des jeweiligen weiteren Submoduls (20) je nach deren Schaltzustand überbrückt oder aktiv ist, und
- **dass** die Halbleiterschalter (22) der weiteren Submodule (20) derart angesteuert werden, dass über die symmetrische Belastung der Phasen des Drehstrom-Versorgungsnetzes (3) mit Wirkleistung hinausgehende Rückwirkungen der Phasen des Drehstrom-Lichtbogenofens (1) auf das Drehstrom-Versorgungsnetz (3) minimiert werden.

7. Stromversorgungsanlage nach Anspruch 5 oder 6,
**dadurch gekennzeichnet,**
**dass** der Blindleistungskompensator (18) mit den primärseitigen Phasen des Ofentransformators (4) verbunden ist.

8. Stromversorgungsanlage nach Anspruch 5 oder 6,
**dadurch gekennzeichnet,**
**dass** der Blindleistungskompensator (18) mit den Phasen des Drehstrom-Versorgungsnetzes (3) verbunden ist.

9. Stromversorgungsanlage nach einem der obigen Ansprüche,
**dadurch gekennzeichnet,**
**dass** mit den primärseitigen Phasen des Ofentransformators (4) und/oder mit den Phasen des Drehstrom-Versorgungsnetzes (3) eine Kondensatorschaltung (24) verbunden ist.

10. Stromversorgungsanlage nach einem der obigen Ansprüche,
**dadurch gekennzeichnet,**
**dass** jeder Wechselrichter (7) mit maximal einem Ofentransformator (4) verbunden ist.

## Claims

1. Power supply system for a polyphase arc furnace (1),
- wherein the power supply system has at least one furnace transformer (4) whose primary is connected via an indirect converter (5) to a polyphase mains system (3) and whose secondary is connected to the polyphase arc furnace (1),
- wherein the indirect converter (5) has at least one rectifier (6) on the mains side, at least one inverter (7) on the transformer side, and a link circuit (8) between the rectifier (6) and the inverter (7),
- wherein each phase of the polyphase mains system (3) is connected to the link circuit (8) via in each case two converter elements (11) of the rectifier (6), and
- wherein each primary phase of the furnace transformer (4) is connected to the link circuit (8) via in each case two converter elements (12) of the inverter (7),
- wherein each converter element (11, 12) consists of a multistage series circuit of submodules (13),
- wherein each submodule (13) comprises an energy storage capacitor (14) and self-commutated semiconductor switches (15),
- wherein the semiconductor switches (15) in each submodule (13) can be switched independently of the semiconductor switches (15) in the other submodules (13) in the same converter element (11, 12) and in the other converter elements (11, 12), such that the energy storage capacitor (14) in the respective submodule (13) is bridged or active by means of the semiconductor switches (15) in the respective submodule (13), depending on their switching state.

2. Power supply system according to Claim 1,
**characterized**
- **in that** the semiconductor switches (15) in the converter elements (11, 12) are operated such that reactions, which go beyond the balanced load on the phases of the polyphase
power supply system (3) with real power, of the phases of the polyphase arc furnace (1) on the polyphase mains system (3) are minimized.

3. Power supply system according to Claim 2,
**characterized**
**in that** the number of semiconductor switches (15) per submodule (13) is two.

4. Power supply system according to Claim 2 or 3,
**characterized**
**in that** the furnace transformer (4) does not have a power factor corrector connected in parallel with it.

5. Power supply system according to Claims 1, 2 or 3,
**characterized**
**in that** a power factor corrector (18) is connected in parallel with the furnace transformer (4).

6. Power supply system according to Claim 5,
**characterized**
- **in that** the power factor corrector (18) has a number of further converter elements (19),
- **in that** each further converter element (19) consists of a multistage series circuit of further submodules (20), each of which comprises an energy storage capacitor (21) and self-commutated semiconductor switches (22).
- **in that** the semiconductor switches (22) in each further submodule (20) can be switched independently of the semiconductor switches (22) in the other further submodules (20) in the same further converter element (19) and in the other converter elements (19), such that the energy storage capacitor (21) in the respective further submodule (20) is bridged or active by means of the semiconductor switches (22) in the respective further submodule (20), depending on their switching state, and
- **in that** the semiconductor switches (22) in the further submodules (20) are operated such that reactions, which go beyond the balanced load on the phases of the polyphase mains system (3) with real power, of the phases of the polyphase arc furnace (1) on the polyphase mains system (3) are minimized.

7. Power supply system according to Claim 5 or 6,
**characterized**
**in that** the power factor corrector (18) is connected to the primary phases of the furnace transformer (4).

8. Power supply system according to Claim 5 or 6,
**characterized**
**in that** the power factor corrector (18) is connected to the phases of the polyphase mains system (3).

9. Power supply system according to one of the preceding claims,
**characterized**
**in that** a capacitor circuit (24) is connected to the primary phases of the furnace transformer (4) and/or to the phases of the polyphase mains system (3).

10. Power supply system according to one of the above claims,
**characterized**
**in that** each inverter (7) is connected to a maximum of one furnace transformer (4).

## Revendications

1. Installation d'alimentation en courant électrique d'un four ( 1 ) à arc électrique triphasé,
- dans laquelle l'installation d'alimentation en courant électrique comporte au moins un transformateur ( 4 ) de four, qui est relié, du côté primaire, à un réseau ( 3 ) d'alimentation en courant triphasé par l'intermédiaire d'un convertisseur ( 5 ) de circuit intermédiaire et, du côté secondaire, au four ( 1 ) à arc électrique triphasé,
- dans laquelle le convertisseur ( 5 ) de courant intermédiaire comporte, du côté du réseau, au moins un redresseur ( 6 ), du côté du transformateur, au moins un onduleur ( 7 ) et, entre le redresseur ( 6 ) et l'onduleur ( 7 ), un circuit ( 8 ) intermédiaire,
- dans laquelle chaque phase du réseau ( 3 ) d'alimentation triphasée est reliée au circuit (8) intermédiaire par respectivement deux éléments (11) de convertisseur du redresseur ( 6 ) et
- dans laquelle chaque phase du côté primaire du transformateur ( 4 ) du four est reliée au circuit ( 8 ) intermédiaire par respectivement deux éléments ( 12 ) de convertisseur de l'onduleur ( 7 ),
- dans laquelle chaque élément ( 11, 12 ) de convertisseur est constitué d'un circuit série à plusieurs étages de sous-modules ( 13 ),
- dans laquelle chaque sous-module ( 13 ) comprend un condensateur ( 14 ) d'accumulation et un interrupteur ( 15 ) à semiconducteur à commutation automatique,
- dans laquelle l'interrupteur ( 15 ) à semiconducteur de chaque sous-module ( 13 ) peut être fermé indépendamment des interrupteurs ( 15 ) à semiconducteur des autres sous-modules ( 13 ) du même élément ( 11, 12 ) de redresseur et des autres éléments ( 11, 12 ) de redresseur, de manière à ce que le condensateur ( 14 ) d'accumulation du sous-module ( 13 ) respectif soit shunté ou actif au moyen de l'interrupteur ( 15 ) à semiconducteur du sous-module ( 13 ) respectif suivant son état de commutation.

2. Installation d'alimentation en courant électrique suivant la revendication 1,
**caractérisée**
- **en ce que** les interrupteurs ( 15 ) à semiconducteur des éléments ( 11, 12 ) de convertisseur sont commandés de manière à minimiser, sur le réseau ( 3 ) d'alimentation triphasée par la charge symétrique des phases du réseau ( 3 ) d'alimentation triphasée, des réactions, allant au-delà de la puissance effective, des phases du four ( 1 ) à arc électrique triphasé.

3. Installation d'alimentation en courant électrique suivant la revendication 2,
**caractérisée**
**en ce que** le nombre d'interrupteurs ( 15 ) à semiconducteur par sous-module ( 13 ) est de deux.

4. Installation d'alimentation en courant électrique suivant la revendication 2 ou 3,
**caractérisée**
**en ce qu'**un compensateur de puissance réactive n'est pas monté en parallèle au transformateur ( 4 ) du four.

5. Installation d'alimentation en courant électrique suivant la revendication 1, 2 ou 3,
**caractérisée**
**en ce qu'**un compensateur ( 18 ) de puissance réactive est monté en parallèle au transformateur ( 4 ) du four.

6. Installation d'alimentation en courant électrique suivant la revendication 5,
**caractérisée**
- **en ce que** le compensateur ( 18 ) de puissance réactive a un certain nombre d'autres éléments ( 19 ) de convertisseur,
- **en ce que** chaque autre élément ( 19 ) de convertisseur est constitué d'un circuit série à plusieurs étages d'autres sous-modules ( 20 ), dont chacun comprend un condensateur ( 21 ) d'accumulation et un interrupteur ( 22 ) à semiconducteur à commutation automatique,
- **en ce que** l'interrupteur ( 15 ) à semiconducteur de chaque sous-module ( 13 ) peut être fermé indépendamment des interrupteurs ( 15 ) à semiconducteur des autres sous-modules ( 13 ) du même élément ( 11, 12 ) de redresseur et des autres éléments ( 11, 12 ) de redresseur, de manière à ce que le condensateur ( 14 ) d'accumulation du sous-module ( 13 ) respectif soit shunté ou actif au moyen de l'interrupteur ( 15 ) à semiconducteur du sous-module ( 13 ) respectif suivant son état de commutation, et
- **en ce que** les interrupteurs ( 22 ) à semiconducteur des autres sous-modules ( 20 ) sont commandés de manière à minimiser, sur le réseau ( 3 ) d'alimentation triphasée par la charge symétrique des phases du réseau ( 3 ) d'alimentation triphasée, des réactions, allant au-delà de la puissance effective, des phases du four (1) à arc électrique triphasé.

7. Installation d'alimentation en courant électrique suivant la revendication 5 ou 6,
**caractérisée**
**en ce que** le compensateur ( 18 ) de puissance réactive est relié aux phases du côté primaire du transformateur ( 4 ) du four.

8. Installation d'alimentation en courant électrique suivant la revendication 5 ou 6,
**caractérisée**
**en ce que** le compensateur ( 18 ) de puissance réactive est relié aux phases du réseau ( 3 ) d'alimentation triphasée.

9. Installation d'alimentation en courant électrique suivant l'une des revendications précédentes,
**caractérisée**
**en ce qu'**un circuit ( 24 ) de condensateur est relié aux phases primaires du transformateur ( 4 ) de four et/ou aux phases du réseau ( 3 ) d'alimentation triphasée.

10. Installation d'alimentation en courant électrique suivant l'une des revendications précédentes,
**caractérisée**
**en ce que** chaque onduleur ( 7 ) est relié au maximum à un transformateur ( 4 ) de four.
